# EUROPEAN PATENT APPLICATION

(11) **EP 3 875 522 A1**
(43) Date of publication of application: **08.09.2021**
(21) Application number: 19880310.8
(22) Date of filing: 27.09.2019
(51) Int. Cl.: C08J 9/36, B05D 7/00, B05D 7/24, B32B 5/22, C08J 9/26, H01M 2/16

(54) **METHOD FOR PRODUCING POROUS FILM, AND POROUS FILM**

(30) Priority: 30.10.2018 JP 2018203981
(71) Applicant: The Japan Steel Works, Ltd., Tokyo 141-0032 (JP)
(72) Inventor: ISHIGURO, Ryo, Hiroshima-shi, Hiroshima 736-8602 (JP); NAKAMURA, Satoru, Hiroshima-shi, Hiroshima 736-8602 (JP); AOKI, Takayuki, Yao-shi, Osaka 581-0075 (JP); ODA, Hiroshi, Yao-shi, Osaka 581-0075 (JP)
(74) Representative: Locas, Davide
(86) International application number: PCT/JP2019/038361
(87) International publication number: WO 2020/090313

(57) **Abstract**

A porous film having favorable characteristics is manufactured. A method of manufacturing the porous film of the present invention includes: (a) a step of modifying a first filler to be hydrophobic by mixture of the first filler and an additive; (b) a step of forming a coating liquid by mixture of the hydrophobic first filler, a second filler and solvent; and (c) a step of forming a coating film (CF) by application of the coating liquid onto a surface of a porous base substance (S). In the step (a), the first filler is a cellulose, and a hydrophilic group of the cellulose is substituted with a hydrophobic group by a reaction between the cellulose and the additive. When the coating film is formed on the surface of the porous base substance as described above, mechanical strength and heat resistance of the porous film (separator) can be improved. For example, thermal deformation of the porous film (separator) can be equal to or lower than 5%.

## Description

### TECHNICAL FIELD

The present invention can be preferably utilized for a method of manufacturing a porous film for use in a separator of a battery cell and others.

### BACKGROUND ART

In recent years, battery cells such as lithium-ion battery cells for use in cars and infrastructures have been actively utilized. Along with high capacitance and high power of these lithium battery cells, improvement of safety has been further demanded. In the battery cell such as the lithium-ion battery cell, a gap between a positive-electrode material and a negative-electrode material is separated by a porous film (a porous insulator, a porous resin compact) that is called a separator. The separator has a plurality of micropores each having a size transmitting, for example, a lithium ion. By movement of the lithium ion between the positive-electrode material and the negative-electrode material through this pore, charging and discharging can be repeated. In this manner, the separator has a role of preventing the short circuit by separating the positive-electrode material and the negative-electrode material.

When a temperature inside the battery cell becomes high from any cause, the movement of the lithium ion is stopped by closure of the micropores of the separator, so that the battery-cell function is stopped. Such a function is called a "shut-down function".

As described above, the separator plays a role of a safety unit of the battery cell, and it is necessary to improve mechanical strength and heat resistance of the separator in order to improve the safety.

For example, a Patent Document 1 (Japanese Patent Application Laid-Open Publication No. 2016-183209) discloses a technique for forming a cover layer containing inorganic particles and a binder resin composition on at least one-side surface of a polyolefin resin porous film.

A Patent Document 2 (Japanese Patent Application Laid-Open Publication No. 2017-068900) discloses a technique for forming a cover layer by applying a coating liquid containing a filler and a resin binder onto a polyolefin-based resin porous film, and then, drying the coating liquid.

### RELATED ART DOCUMENTS

### PATENT DOCUMENTS

Patent Document 1: Japanese Patent Application Laid-Open Publication No. 2016-183209
Patent Document 2: Japanese Patent Application Laid-Open Publication No. 2017-068900

### SUMMARY OF THE INVENTION

### PROBLEMS TO BE SOLVED BY THE INVENTION

The present inventors have engaged in the research and development of the porous film for use in the separator of the battery cell, and have enthusiastically studied on a porous film having favorable characteristics. In order to particularly improve the mechanical strength and the heat resistance of the porous film, the present inventors have found a coating technique of the porous film.

Other objects and novel characteristics will be apparent from the description of the present specification and the accompanying drawings.

### MEANS FOR SOLVING THE PROBLEMS

A method of manufacturing a porous film disclosed in the present application includes a step (a) of preparing a porous film as a separator and a step (b) of forming the porous film between a positive-electrode material and a negative-electrode material. And, the step (a) includes a step (a1) of modifying a first filler to be hydrophobic by mixture of the first filler and an additive, a step (a2) of forming a coating liquid by mixture of the hydrophobic first filler, a second filler and solvent, and a step (a3) of forming a coating film by application of the coating liquid onto a surface of a porous base substance.

The porous film disclosed in the present application is a porous film including a porous base substance and a coating film formed on a surface of the porous base substance, and the coating film includes a hydrophobic first filler and a second filler, and has a thermal deformation property that is equal to or lower than 5%.

### EFFECTS OF THE INVENTION

According to the method of manufacturing the porous film disclosed in the present application, the porous film having favorable characteristics can be manufactured.

According to the porous film disclosed in the present application, characteristics of the porous film can be improved.

### BRIEF DESCRIPTIONS OF THE DRAWINGS

FIG. 1 is a cross-sectional view schematically showing a configuration of a porous film of a first embodiment;
FIG. 2 is a diagram schematically showing one example of a configuration of a lithium-ion battery cell using the porous film of the first embodiment;
FIG. 3 is a diagram (photograph) showing outer appearance of a kneader (tabletop twin screw kneader);
FIG. 4 is a diagram (photograph) showing outer appearance of a press machine;
FIG. 5 is a diagram (photograph) showing outer appearance of a tabletop film drawing machine;
FIG. 6 is a diagram (photograph) showing outer appearance of a fibrillating process machine;
FIG. 7 is diagrams (photographs) each showing a state of a sample treated for one hour under atmosphere of 140°C, 180°C or 200°C;
FIG. 8 is diagrams (photographs) each showing a state of commercial coating liquid or developed coating liquid;
FIG. 9 is diagrams (photographs) each showing wettability of the developed coating liquid on a base substance;
FIG. 10 is a schematic view showing a configuration of a manufacturing machine (system) of a second embodiment; and
FIG. 11 is a cross-sectional view schematically showing a configuration of a gravure coating machine.

### BEST MODE FOR CARRYING OUT THE INVENTION

Hereinafter, embodiments will be described in detail with reference to the working examples and the accompanying drawings. Note that components having the same function are denoted by the same reference symbols throughout all the drawings for describing the embodiments, and the repetitive description thereof will be omitted.

### (First Embodiment)

A porous film of the present embodiment and a method of manufacturing the porous film will be explained below. The porous film of the present embodiment can be used as the so-called separator of the battery cell.

### [Explanation for Structure]

The porous film of the present embodiment includes a base substance (porous base material) "S" and a coating film (cover film) "CF" formed on a surface of the base substance S.

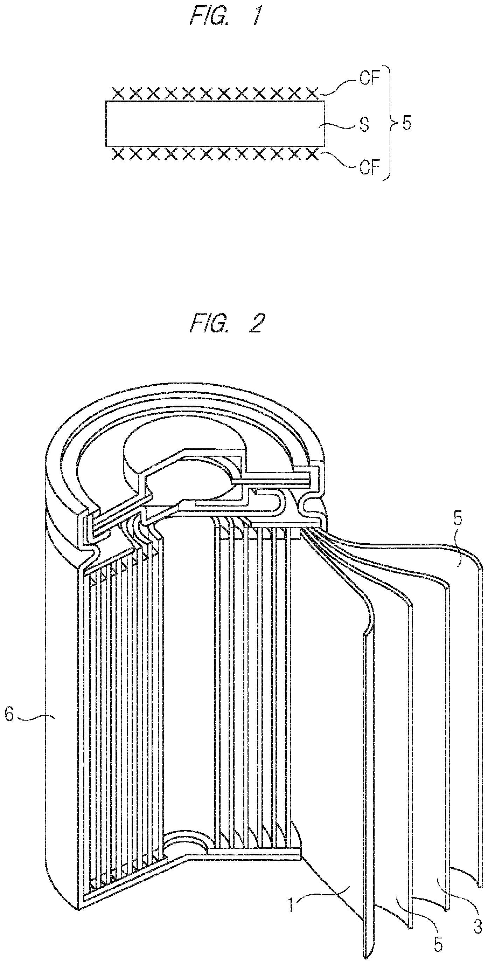

FIG. 1 is a cross-sectional view schematically showing a configuration of a porous film of the present embodiment. FIG. 2 is a diagram schematically showing one example of a configuration of a lithium-ion battery cell using the porous film of the present embodiment.

As shown in FIG. 2, a cylindrical battery cell includes a can 6, and this can 6 houses an electrode group in which belt-shaped positive-electrode material 1 and negative-electrode material 3 are rolled so as to intervene a separator 5 therebetween. A positive-electrode current collector tab on an upper end surface of the electrode group is coupled to a positive electrode cap. A negative-electrode current collector tab on a lower end surface of the electrode group is coupled to a bottom of the can 6. Note that an insulating cover (not illustrated) is formed on an outer circumferential surface of the can 6. And, electrolytic solution (not illustrated) is introduced into the can 6. In the present application, the cylindrical battery cell has been explained. However, the structure of the battery cell is not limited, and, for example, a laminated battery cell is also applicable.

As described above, the lithium-ion battery cell includes the positive-electrode material 1, the negative-electrode material 3, the separator 5 and the electrolytic solution, and the separator 5 is arranged between the positive-electrode material 1 and the negative-electrode material 3. The separator 5 has a lot of micropores. For example, at the time of the charging, in other words, at the time of connection of a charger to the gap between the positive electrode (the positive electrode cap) and the negative electrode (the bottom of the can 6), the lithium ions inserted in a positive-electrode active material are desorbed and released into the electrolytic solution. The lithium ions released into the electrolytic solution move in the electrolytic solution, pass the micropores of the separator, and reach the negative electrode. The lithium ions having reached the negative electrode are introduced into a negative-electrode active material configuring the negative electrode.

Since the lithium ions move between the positive-electrode material and the negative-electrode material through the micropores (not illustrated) that are formed in the base substance S shown in FIG. 1 as described above, the charging and the discharging can be repeated.

In the porous film of the present embodiment, a coating film CF is formed on the surface of the base substance S having a lot of micropores formed therein as shown in FIG. 1. This coating film CF includes hydrophobic cellulose as the first filler and alumina as the second filler.

Since the coating film is formed on the surface of the base substance S as described above, the mechanical strength and the heat resistance of the porous film (separator) can be improved. The coating film CF is not formed so as to cover all micropores of the base substance S, and a Gurley number (air permeability, [sec/100 cc]) of the base substance S (porous film, separator) having the coating film CF formed thereon is equal to or larger than 10 and equal to or smaller than 3000, and therefore, ventilation performance is secured. According to the porous film (separator) of the present embodiment, the thermal deformation can be designed to be equal to or lower than 5% as described later.

### [Explanation for Manufacturing Method]

A manufacturing process of the porous film of the present embodiment will be explained, and besides, the configurations of the porous film and the coating film will be more clarified below.

The manufacturing process of the porous film of the present embodiment includes the following steps.

### (a: Step of Preparing Base Substance (Porous Film before Coating))

As the base substance S, a microporous film can be used. For example, a commercial polyethylene-made microporous film can be used. Alternatively, the base substance (microporous film) S may be formed by the following steps.

For example, the film (thin film) is formed by melting and kneading polyolefin (resin) and a plasticizer by using a kneader, extruding the resultant material to be shaped into a sheet by using an extruder, and then, drawing the kneaded material by using a press machine and a film drawing machine.

As the polyolefin, a material that is processible by regular extrusion, injection, blown film extrusion, blow molding or others is used. For example, a homopolymer, a copolymer, a multistage polymer or others, made of ethylene, propylene, 1-butene, 4-methyl-1-pentene, 1-hexene, 1-octene or others, can be used as the polyolefin. And, single use or combination use of the polyolefin selected from a group of the homopolymer, the copolymer and the multistage polymer is also applicable. As a typical example of the polymer, low-density polyethylene, linear low-density polyethylene, middle-density polyethylene, high-density polyethylene, ultra high molecular weight polyethylene, isotactic polypropylene, atactic polypropylene, ethylene-propylene random copolymer, polybutene, ethylene propylene rubber and others are exemplified.

Note that it is particularly preferable for the base substance S to use a resin containing polyethylene as a main component in terms of a necessary performance such as a high melting point and high strength. And, in terms of the shut-down performance or others, it is preferable to bring an occupancy of the polyolefin to be equal to or higher than 50 weight% of the resin component. In the case of the usage of the ultra high molecular weight polyolefin having a molecular weight that is equal to or more than one million, uniformly kneading is difficult if a content of the ultra high molecular weight polyolefin is more than 50 parts by weight per 100 parts by weight of the kneaded material (the resin and the dispersion liquid), and therefore, it is preferable to bring the content of the ultra high molecular weight to be equal to or less than 50 parts by weight per it.

The plasticizer is added to a thermoplastic resin to improve the flexibility and the weatherability. Further, in the present embodiment, the pores can be formed in the resin compact (film) by the later-described defatting step to remove the plasticizer.

As the plasticizer, organic solvent having a molecular weight of 100 to 1500 and a boiling point of 50°C to 300°C can be used. More specifically, one-type or plural-type mixture of chain or cyclic aliphatic hydrocarbon of liquid paraffin, nonane, decane, decalin, paraxylene, undecane or dodecane, mineral-oil fraction having a boiling point that corresponds to those of the aliphatic hydrocarbons, or phthalate in liquid form at the room temperature such as dibutyl phthalate or dioctyl phthalate can be used. Alternatively, one-type or plural-type mixture of alcohols such as ethanol or methanol, nitrogen-based organic solvent such as NMP (N-methyl-2-pyrrolidone) or dimethylacetamide, ketones such as acetone or methyl ethyl ketone, and esters such as ethyl acetate or butyl acetate can be used.

In the film (thin film) formed by drawing the kneaded sheet material, phase separation occurs between the polyolefin and the plasticizer. More specifically, the plasticizer is shaped into a nanometer-size island form. The island-form plasticizer becomes the pore when the nanometer-size plasticizer is removed by the later-described organic-solvent process step, so that the porous thin film is formed. A step of forming the separator for forming a lot of micropores in the resin compact by the step of removing the plasticizer is called a "wet method".

For example, when the film (thin film) that is formed in the above-described drawing step is sunk into the organic solvent, the plasticizer in the film is extracted into the organic solvent, and is removed from the film (thin film).

As the organic solvent, methylene chloride, hexane, octane, cyclohexane or others can be used. Among them, it is preferable to use the methylene chloride in terms of producibility.

Then, the organic solvent on the surface of the film (thin film) is vaporized, and the surface is subjected to a thermal process (thermal fixation) if needed, so that the base substance (microporous film) S can be obtained.

### (b: Step of Applying Coating Liquid onto Base Substance)

### A) Hydrophobic Process

In this step, a mixture is prepared by mixing the cellulose and the additive (such as succinic anhydride), and is reacted for, for example, about 0.5 to 300 minutes under a temperature of 100 to 200°C. The more the additive is, the easier the reaction proceeds. However, in terms of the producibility and the cost, the content of the additive is preferably 0.01 to 50 parts by weight per 100 parts by weight of the cellulose raw material, more preferably 0.1 to 30 parts by weight per it.

As the cellulose, for example, a cellulose nanofiber can be used. This is a micro-powder cellulose.

The cellulose (cellulose, Cell-OH) is a carbohydrate expressed as (C₆H₁₀O₅)ₙ. This is expressed in the following chemical structural formula (Chemical Structural Formula 1).

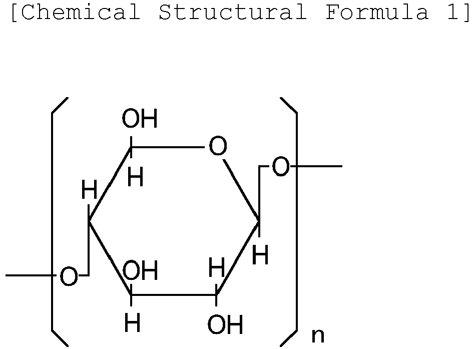

As shown in the following chemical structural formula (Chemical Structural Formula 2), note that a cellulose obtained by substituting (one or) some of a plurality of hydroxyl groups of the carbohydrate expressed as (C₆H₁₀O₅)ₙ with a group having a hydroxyl group (for example, -R-OH such as -CH₂OH) may be used.

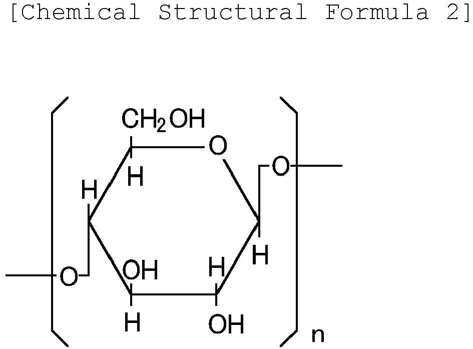

A raw material of the cellulose nanofiber (referred to as CeNF below) is designed to be pulp or others, and the cellulose nanofiber is obtained by fibrillating a cellulose fiber contained in the pulp or others to have a nanometer size. For example, a created resultant material from hydrolysis of the pulp can be used as the cellulose nanofiber. A moiety having densely and regularly-arranged molecular chain in the cellulose is often referred to a crystalline cellulose.

A shape of the powdery cellulose fiber configuring the cellulose nanofiber is not limited. However, an elongated powder shape or a substantially spherical shape is applicable.

The cellulose nanofiber is light, highly strong and is resistant to heat. Therefore, by the addition of the cellulose nanofiber to the coating liquid, the strength and the heat resistance of the coating film and the separator can be improved. When the cellulose is hydrophobized as described in the present embodiment, the dispersibility in the coating liquid can be improved, and the coating performance on the base substance S can be improved.

As the cellulose nanofiber, not only a material derived from a plant fiber such as the pulp as described above but also a material derived from an animal fiber are applicable.

The additive is used for modifying the cellulose to be hydrophobic (lipophilic). As seen in the above-described chemical structural formulae (Chemical Structural Formulae 1 and 2), the cellulose is hydrophilic because of having a hydroxyl group (hydrophilic group), the celluloses are easy to gather to form a cluster because of a hydrogen bond in mixture into a base material, and are difficult to evenly disperse in the base material.

Therefore, when the hydrophobic process (lipophilic process) along with the usage of the additive (such as the carboxylic compound) is performed to the hydroxyl group of the cellulose, the dispersibility in the base material can be improved. In other words, the hydroxyl group (-OH) moiety of the cellulose can be substituted with the hydrophobic group. More specifically, (one or) some of the hydroxyl groups of the cellulose are esterified by a carboxylic compound (R-CO-OH). In other words, the hydroxyl group (-OH) moiety of the cellulose is changed to an ester bond (-O-CO-R). By the esterification, the cellulose is modified to be hydrophobic (lipophilic). That is, the esterified cellulose is hydrophobic (lipophilic). An example of the esterifying (hydrophobic) reaction of the cellulose is expressed by the following reaction formula.

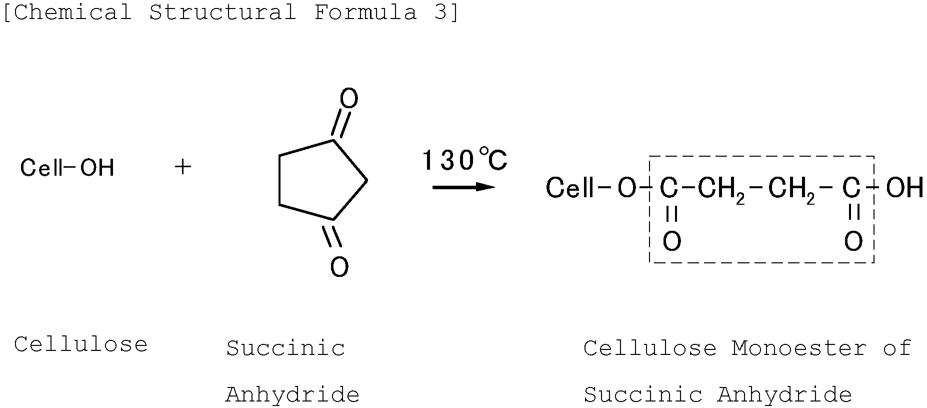

The additive is not particularly limited if the additive has a composition capable of providing the hydrophobic group to the hydrophilic group of the cellulose. For example, the carboxylic compound can be used. Particularly, a compound having two or more carboxylic groups, an acid anhydride of the compound having two or more carboxylic groups or others is preferably used. Among the compounds each having two or more carboxylic groups, a compound (dicarboxylic compound) having two carboxylic groups is preferably used.

As the compound having two carboxylic groups, dicarboxylic acid compounds such as propanedioic acid (malonic acid), butanedioic acid (succinic acid), pentanedioic acid (glutaric acid), hexanedioic acid (adipic acid), 2-methyl propanedioic acid, 2-methyl butanedioic acid, 2-methyl pentanedioic acid, 1, 2-cyclohexane dicarboxylic acid, 2-butenedioic acid (maleic acid, fumaric acid), 2-pentenedioic acid, 2, 4-hexadienedioic acid, 2-methyl-2-butenedioic acid, 2-methyl-2-pentenedioic acid, 2-methylidene butanedioic acid (itaconic acid), benzene-1, 2-dicarboylic acid (phthalic acid), benzene-1, 3-dicarboylic acid (isophthalic acid), benzene-1, 4-dicarboylic acid (terephthalic acid) and ethanedioic acid (oxalic acid) are exemplified. As the acid anhydride of the compound having two carboxylic groups, acid anhydrides of the dicarboxylic compounds or compounds containing a plurality of carboxylic groups such as maleic anhydride, succinic anhydride, phthalic anhydride, glutaric anhydride, adipic anhydride, itaconic anhydride, pyromellitic anhydride, 1, 2-cyclohexane dicarboxylic anhydride are exemplified. As a derivative of the acid anhydride of the compound having two carboxylic groups, materials that are obtained by substituting at least a part of hydrogen atoms of the acid anhydride of the compound having the carboxylic group such as dimethyl maleic anhydride, diethyl maleic anhydride and diphenyl maleic anhydride, with a substituent group (such as an alkyl group, a phenyl group or others), are exemplified. Among these materials, the maleic anhydride, succinic anhydride or the phthalic anhydride is preferable because of being industrially readily applicable and easily gasified.

Further, a process of modifying the hydrophilic group of the cellulose by using the carboxylic compound, and then, adding alkylene oxide to improve the hydrophilicity may be secondarily performed.

Alternatively, two or more types of the additives may be added, or the above-described hydrophobic process may be performed plural times. However, in terms of the cost and the producibility, it is preferable to perform the process in one step.

Alternatively, when the cellulose reacted with the additive contains the unreacted substance of the additive, a step of extracting and removing the unreacted substance may be performed. The extracting and removing process is not particularly limited. However, the dry hydrophobic cellulose can be obtained by, for example, adding the solvent such as acetone, hexane, methanol or ethanol to the mixture of the additive and the cellulose, and then, removing the solvent to remove the additive dissolved in the solvent.

A state of the hydrophobic cellulose may be any of powder state, liquid state (such as dispersion state in the solvent) or others. And, pulp or lignin that is a constituent of wood may be adhered to the cellulose.

Time for the hydrophobic reaction (esterification) resulted from the mixture of the cellulose and the additive can be adjusted in a range that is, for example, equal to or longer than 0.5 minutes and shorter than 300 minutes. The reaction time significantly affects a production speed, and therefore, is preferably equal to or longer than 0.5 minutes and equal to or shorter than 60 minutes, more preferably equal to or longer than 0.5 minutes and equal to or shorter than 30 minutes. The reaction speed can be increased by increase in the mixability (kneading performance). The mixability (kneading performance) can be increased by, for example, usage of a twin-screw kneader/extruder. Note that not only the twin-screw kneader/extruder but a single-screw kneader/extruder or a multi-screw kneader/extruder having two or more screws may be used. In the usage of the single-screw or multi-screw kneader/extruder, the cellulose can be physically fibrillated by changing a screw shape. As the screw shape having the fibrillating ability, a shape that is called a kneading disc is exemplified.

### B) Fibrillating Process

As the fibrillating process (micro (nano) fibrillation process), a chemical process method, a mechanical process method and others are exemplified. A method of combination of these methods may be used. By such a fibrillating process (micro-fibrillation process), CeNF having a fiber length (L) that is equal to or longer than 3 nm and equal to or shorter than 10 µm and an aspect ratio (Length "L"/ Diameter "R") that is equal to or larger than 0.01 and equal to or smaller than 10000 can be obtained.

As the chemical process method, a method such as oxidation, etherification, cationization and esterification is applicable. Alternatively, before the chemical process, the above-described hydrophobic process of the cellulose may be performed. Further, the stepwise fibrillating process may be performed by combination of a plurality of chemical processes. In other words, the cellulose may be fibrillated by stepwise processes.

As the mechanical process method, for example, a grinder method, a counter collision method, a ball mill method or others is applicable. Alternatively, before the mechanical process, the above-described hydrophobic process of the cellulose may be performed. Further, the stepwise fibrillating process may be performed by combination of a plurality of processes.

As described above, the fibrillating process (micro-fibrillation process) may be performed after the hydrophobization of the cellulose, the hydrophobization may be performed after the fibrillating process (micro-fibrillation process) of the cellulose, or the fibrillating process (micro-fibrillation process) and the hydrophobization of the cellulose may be performed at the same time.

### C) Preparing Step of Coating Liquid (Agitation Process Step)

The coating liquid is prepared by mixture of the hydrophobic cellulose, the inorganic filler (the second filler) and the solvent. A content of the cellulose is preferably equal to or more than 0.01 parts by weight and equal to or less than 40 parts by weight per 100 parts by weight (wt%) of the inorganic filler (such as alumina). In other words, the content of the cellulose in the coating liquid is equal to or more than 0.01 parts by weight and equal to or less than 40 parts by weight per 100 parts by weight (wt%) of the inorganic filler (such as alumina) . The content of the cellulose in the coating film is equal to or more than 0.01 parts by weight and equal to or less than 40 parts by weight per 100 parts by weight (wt%) of the inorganic filler (such as alumina).

A method of preparing the coating liquid is not limited. However, in order to avoid the gathering of the cellulose and to evenly mix the cellulose, the coating liquid is prepared by agitation after the mixture of the hydrophobic cellulose, the inorganic filler and the solvent. As the agitation method, for example, a method of using a motor or others to rotate a fin attached to a shaft, a vibration method using ultrasonic sound wave or others is applicable.

The inorganic filler (the second filler) is not particularly limited. For example, nano silica, carbon nanotube, talc, alumina, glass fiber or others is applicable. An aspect ratio of the inorganic filler (the second filler) is preferably 0.01 to 300000, more preferably 0.1 to 200000.

The solvent is not particularly limited. However, in consideration of the drying after the coating of the base substance, it is preferable to use water having a boiling point that is equal to or lower than 100°C, ethanol, methanol or others.

As other additive, a thickener (such as carboxymethyl cellulose), a binder (such as acrylic resin), a dispersant (such as surfactant) or others may be added.

The carboxymethyl cellulose is a water-soluble cellulose, and causes high viscosity and favorable coating performance when being added to the coating liquid. The acrylic resin causes favorable adhesiveness of the materials in the coating liquid when being added. A type of the surfactant is not particularly limited. Any of an anionic surfactant, a cationic surfactant, an amphoteric surfactant, a nonionic surfactant and others is applicable, and combination use of two or more types of these materials may be also applicable.

### D) Coating Step onto Base Substance

The surface of the base substance S explained in the section (a: Step of Preparing Base Substance (Porous Film before Coating)) is coated with the coating liquid. The coating method is not limited. For example, a bar coater, a lip coater, a gravure coater or others is applicable. By the drying of the coating liquid after the coating, the coating film can be formed on the surface of the base substance S.

As described above, according to the present embodiment, since the hydrophobic cellulose is added to the coating liquid, the affinity between the coating liquid and the base substance can be improved, and the heat resistance of the porous film can be improved.

In the present embodiment, note that the cellulose has been exemplified as the first filler. However, any filler is applicable if the filler is the hydrophobic filler.

### [Working Examples]

Specific working examples of the method of manufacturing the porous film (separator) of the present embodiment will be explained below.

### (Working Example 1)

### 1: Step of Forming Base Substance (Porous Film before Coating)

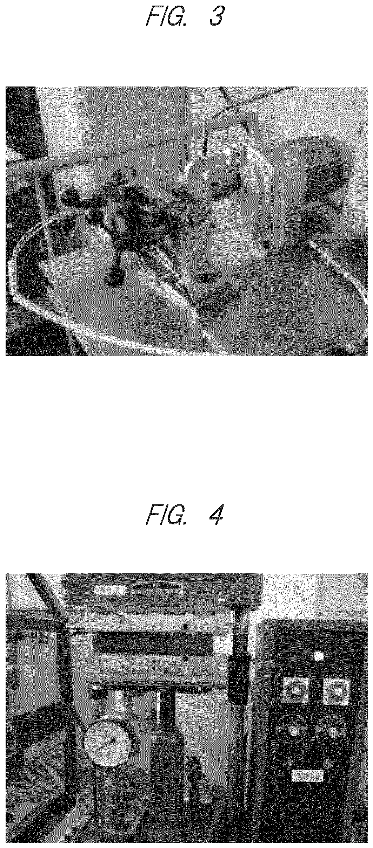

30 parts by weight of the ultra high molecular weight polyethylene (Mitsui HI-ZEX MILLION 030S (produced by Mitsui Chemicals, Inc.)) and 70 parts by weight of the liquid paraffin (P-350P (produced by MORESCO corporation)) were melted and kneaded in the kneader (tabletop twin-screw kneader) shown in FIG. 3, and then, the result material was extruded into the sheet shape by a T-die method. A kneading temperature was set to 180°C, and kneading time was set to 12 minutes. Note that the kneader (tabletop twin screw kneader) is equipment that kneads an introduced raw material by a shaft having two intermeshing screws, and a rotation speed of the shaft (screws) was set to 80 rpm.

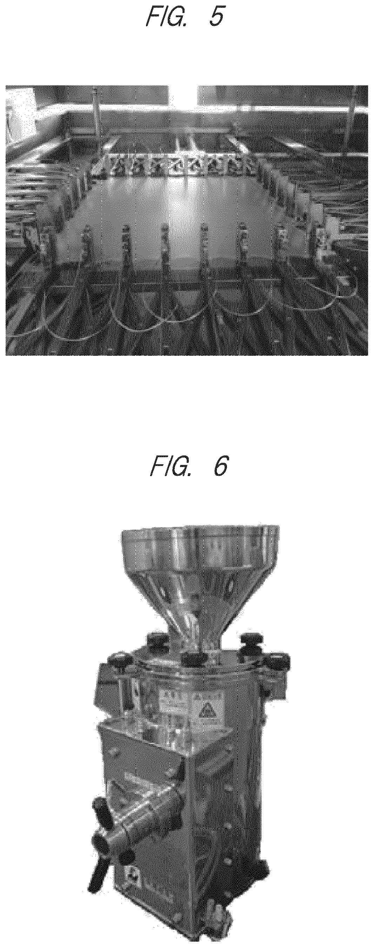

Then, the kneaded material was processed by the press machine as shown in FIG. 4, and was shaped into a film by co-rotating twin-screw film drawing using the tabletop film drawing machine as shown in FIG. 5 in a state in which ends of the pressed sheet are held by pins (clips) . A film thickness was about 25 µm. In this process, the co-rotating twin-screw film drawing means simultaneous film drawing in a first direction (longitudinal direction, MD direction) and a second direction (transverse direction, TD direction) crossing the first direction. A film drawing temperature was set to 110°C, a film drawing ratio was set to 6 (times) and a film drawing speed was set to 3000 mm/min., as film drawing conditions in the first direction (longitudinal direction, MD direction), while a film drawing temperature was set to 110°C, a film drawing ratio was set to 7 (times) and a film drawing speed was set to 3000 mm/min., as film drawing conditions in the second direction (transverse direction, TD direction).

Then, this film was sunk into methylene chloride, so that the liquid paraffin was defatted. Further, this film was drawn again by a transverse film drawing machine, so that the base substance having micropores (also referred to as the porous film before coating or a trial PE separator) was obtained.

### 2: Coating Step with Coating Liquid on Base Substance

### A) Hydrophobic Process

While "CEOLUS FD101" having an average grain diameter of 50 µm (produced by ASAHI KASEI (Chemicals) CORPORATION) was used as the CeNF, the succinic anhydride (SA) in a weight ratio of "CeNF : Succinic Anhydride (SA) = 86.5 : 13.5" was introduced into the kneader (tabletop twin-screw kneader) as shown in FIG. 3, and these materials were kneaded at 130°C for 15 minutes. Since the unreacted succinic anhydride (SA) remains in the kneaded materials, the kneaded materials were rinsed with acetone and dried, so that the hydrophobic CeNF (CeNF modified with SA) was obtained.

### B) Fibrillating Process

3.5 parts by weight of the hydrophobic CeNF powder was introduced into water, and this material was passed through the fibrillating process machine (produced by MASKO SANGYO CO., LTD.) as shown in FIG. 6 ten times, so that the dispersion solution of the fibrillated hydrophobic CeNF was obtained. A content of the hydrophobic CeNF in this dispersion solution was 3.5 parts by weight.

### C) Agitating Process

The dispersion solution of the fibrillated hydrophobic CeNF, the carboxymethyl cellulose, the acrylic resin and the water were mixed, and high purity alumina (produced by SUMITOMO CHEMICAL COMPANY, LIMITED) was introduced. This mixture was agitated by an agitator (produced by SIBATA SCIENTIFIC TECHNOLOGY LTD, M-103) to obtain the coating liquid.

The coating liquid was prepared by additions of 2 wt% of the CeNF, 2 wt% of the carboxymethyl cellulose and 2.5 wt% of the acrylic resin per 100 wt% of the alumina so that a total solid content concentration of the coating liquid is about 40 wt%. That is, the fibrillated hydrophobic CeNF was prepared so as to have a content that is 2 parts by weight per 100 parts by weight of the alumina.

### D) Coating Step on Base Substance

The coating liquid was applied on both-side surfaces of the base substance (also referred to as trial PE separator) explained in the section "1. Step of Forming Base Substance (Porous Film before Coating) " by the bar coater, and was dried at 80°C for one hour. Note that the coating thickness on the one-side surface was set to 7 µm (14 µm on the both-side surfaces). The porous film (separator) having the coating layer on the both-side surfaces of the base substance was formed.

### 3: Evaluation

The resultant porous film (separator) was cut out at the right angle with respect to the MD and TD directions to obtain 50 mm × 50 mm square pieces, and then, a thickness of the piece was measured.

Also, the resultant porous film (separator) was left to stand inside a drying chamber (produced by AS ONE CORPORATION, AVO-250NB) heated at 100 to 200°C for one hour, and then, a thermal shrinkage rate (thermal deformation) was calculated on the basis of change in a dimension of the porous film before and after the drying.

### (Working Example 2)

The same processes as those of the working example 1 were performed to form the porous film (separator), except for the coating with the coating liquid on the one-side surface, and the sample was evaluated. The coating thickness only on the one-side surface was set to 7 µm.

### (Working Example 3)

The same processes as those of the working example 1 were performed to form the porous film (separator), except for the usage of the commercial polyethylene separator (produced by CS-TECHNOLOGY CO., LTD, also referred to as commercial PE separator) in place of the base substance explained in the section "1. Step of Forming Base Substance (Porous Film before Coating)", and the sample was evaluated. The coating thickness on the one-side surface was set to 7 µm (14 µm on the both-side surfaces).

### (Working Example 4)

The same processes as those of the working example 3 were performed to form the porous film (separator), except for the coating with the coating liquid on the one-side surface, and the sample was evaluated. The coating thickness only on the one-side surface was set to 7 µm.

### (Comparative Example 1)

The same processes as those of the working example 1 were performed to form the porous film (separator), except for the usage of the coating liquid without the addition of the dispersion solution of the fibrillated hydrophobic CeNF to the coating liquid explained in the section "C) Agitating Process" in the working example 1, and the sample was evaluated. The coating thickness on the one-side surface was set to 7 µm (14 µm on the both-side surfaces).

### (Comparative Example 2)

The same processes as those of the comparative example 1 were performed to form the porous film (separator), except for the coating with the coating liquid on the one-side surface, and the sample was evaluated. The coating thickness only on the one-side surface was set to 7 µm.

### (Comparative Example 3)

The same processes as those of the comparative example 1 were performed to form the porous film (separator), except for the usage of the commercial polyethylene separator (produced by CS-TECHNOLOGY CO., LTD) in place of the base substance explained in the section "1. Step of Forming Base Substance (Porous Film before Coating)", and the sample was evaluated. The coating thickness on the one-side surface was set to 7 µm (14 µm on the both-side surfaces).

### (Comparative Example 4)

The same processes as those of the comparative example 3 were performed to form the porous film (separator), except for the coating with the coating liquid on the one-side surface, and the sample was evaluated. The coating thickness only on the one-side surface was set to 7 µm.

### (Comparative Example 5)

The same processes as those of the comparative example 1 were performed to form the porous film (separator), except for the usage of the commercial coating liquid in place of the coating liquid explained in the section "C) Agitating Process" in the working example 1, and the sample was evaluated. The coating thickness on the one-side surface was set to 7 µm (14 µm on the both-side surfaces).

### (Comparative Example 6)

The same processes as those of the comparative example 5 were performed to form the porous film (separator), except for the coating with the coating liquid on the one-side surface, and the sample was evaluated. The coating thickness only on the one-side surface was set to 7 µm.

### (Comparative Example 7)

The same processes as those of the comparative example 5 were performed to form the porous film (separator), except for the usage of the commercial polyethylene separator (produced by CS-TECHNOLOGY CO., LTD) in place of the base substance explained in the section "1. Step of Forming Base Substance (Porous Film before Coating)", and the sample was evaluated. The coating thickness on the one-side surface was set to 7 µm (14 µm on the both-side surfaces).

### (Comparative Example 8)

The same processes as those of the comparative example 7 were performed to form the porous film (separator), except for the coating with the coating liquid on the one-side surface, and the sample was evaluated. The coating thickness only on the one-side surface was set to 7 µm.

### (Comparative Example 9)

The base substance explained in the section "1. Step of Forming Base Substance (Porous Film before Coating)" was not coated, and the sample was evaluated.

### (Comparative Example 10)

The commercial polyethylene separator (produced by CS-TECHNOLOGY CO., LTD) was not coated, and the sample was evaluated.

The coating conditions of the working examples and the comparative examples are collectively shown in a table 1. The film formed by each condition is also referred to as sample (porous film, separator) in some cases.

**[Table 1]**

| | Coating liquid | Separator | Coating |
|---|---|---|---|
| Working example 1 | Developed product | Trial PE separator | Both-side surfaces |
| Working example 2 | | | One-side surface |
| Working example 3 | | Commercial PE separator | Both-side surfaces |
| Working example 4 | | | One-side surface |
| Comparative example 1 | Coating | Trial PE separator | Both-side surfaces |
| Comparative example 2 | liquid without cellulose | | One-side surface |
| Comparative example 3 | | Commercial PE separator | Both-side surfaces |
| Comparative example 4 | | | One-side surface |
| Comparative example 5 | Commercial coating liquid | Trial PE separator | Both-side surfaces |
| Comparative example 6 | | | One-side surface |
| Comparative example 7 | | Commercial PE separator | Both-side surfaces |
| Comparative example 8 | | | One-side surface |
| Comparative example 9 | N/A | Trial PE separator | N/A |
| Comparative example 10 | N/A | Commercial PE separator | N/A |

### 4: Results

Results of the thicknesses and the thermal shrinkage rates are shown in a table 2. Note that "×" in the measurement result of the thermal shrinkage rate means that the sample was unmeasurable. If it was impossible to measure the dimension of the film because of the wrinkle or the crack of the coating layer on the surface of the sample, the sample was evaluated to be unmeasurable.

**[Table 2]**

| | Coating thickness after drying | 120°C | | 140°C | | 160°C | | 170°C | | 180°C | | 190°C | | 200°C | |
|---|---|---|---|---|---|---|---|---|---|---|---|---|---|---|---|
| | [*µ* m] | MD | TD | MD TD | | MD TD | | MD TD | | MD | TD | MD | TD | MD TD | |
| Working example 1 | 5.4(both-side surfaces) | 0% | 0% | 0% | 0% | 0% | 0% | 0% | 0% | 1.5% | 0.5% | 2.2% | 1.2% | 3.1% | 2.6% |
| Working example 2 | 2.7 | 0% | 0% | 0% | 0% | 0% | 0% | × | × | × | × | × | × | × | × |
| Working example 3 | 5.3(both-side surfaces) | 0% | 0% | 0% | 0% | 0% | 0% | 0% | 0% | 1.1% | 0% | 1.4% | 0.5% | 2.3% | 1.2% |
| Working example 4 | 2.6 | 0% | 0% | 0% | 0% | 0% | 0% | × | × | × | × | × | × | × | × |
| Comparative example 1 | 5.6(both-side surfaces) | 0% | 0% | 0% | 0% | 2.1% | 2.8% | 3.6% | 4.8% | × | × | × | × | × | × |
| Comparative example 2 | 2.5 | 0% | 0% | 0% | 0% | × | × | × | × | × | × | × | × | × | × |
| Comparative example 3 | 5.5(both-side surfaces) | 0% | 0% | 0% | 0% | 2.2% | 3.4% | 3.2% | 4.1% | × | × | × | × | × | × |
| Comparative example 4 | 2.4 | 0% | 0% | 0% | 0% | × | × | × | × | × | × | × | × | × | × |
| Comparative example 5 | 5.4 (both-side surfaces) | 0% | 0% | 0% | 0% | 1.5% | 2.2% | 3.2% | 4.2% | × | × | × | × | × | × |
| Comparative example 6 | 2.3 | 0% | 0% | 0% | 0% | × | × | × | × | × | × | × | × | × | × |
| Comparative example 7 | 5.3(both-side surfaces) | 0% | 0% | 0% | 0% | 1.2% | 0% | 2.6% | 0% | × | × | × | × | × | × |
| Comparative example 8 | 2.4 | 0% | 0% | 0% | 0% | × | × | × | × | × | × | × | × | × | × |
| Comparative example 9 | 0 | 15% | 20% | × | × | × | × | × | × | × | × | × | × | × | × |
| Comparative example 10 | 0 | 12% | 0% | × | × | × | × | × | × | × | × | × | × | × | × |

The shrinkage of the sample coated with the commercial coating liquid started at 160 °C, and the film was completely shrunk at 180 °C. On the other hand, the thermal shrinkage rate of the sample coated with the developed coating liquid (developed product) was suppressed to be about 3% even at 200°C, and it was confirmed that this sample has excellent heat resistance.

In the comparative example 9 using the trial PE separator, the thermal shrinkage rate at 120°C was 15% in the MD and 20% in the TD, and the sample was completely melted at 140°C. In the comparative example 10 using the commercial PE separator, the thermal shrinkage rate at 120°C was 0% in the TD since the drawing in the TD was not performed but 12% in the MD, and the sample was completely melted at 140°C as similar to the comparative example 9. Therefore, all the separators without being coated resulted in the melting of the film at the temperature that is equal to or lower than 140°C.

In all the comparative examples 1 to 8 using the coating liquid without being added with the cellulose nanofiber or the commercial coating liquid, the shrinkage of the film was observed under the condition of the temperature that was equal to or higher than 160°C, regardless of whether the one-side surface or the both-side surfaces is coated. And, in each of the one-side coated samples, the uncoated surface was shrunk and curled, and it was impossible to measure the dimension. In each of the both-side coated samples, while the thermal shrinkage rate at 170°C was equal to or lower than 5%, the sample was completely melted under the condition of the heating at the temperature that is equal to or higher than 180°C.

Under the one-side coating condition using the coating liquid of each of the present working examples, the surface was deformed to be curled as similar to the cases of the comparative examples, and it was impossible to measure the dimension. On the other hand, under the both-side coating condition, the shrinkage was not observed even under the temperature condition that is equal to or higher than 160°C at which the shrinkage was observed in the comparative examples. Even under the condition of the heating up to 200°C, the thermal shrinkage rate was about 3%.

From the above-described results, it is clear that the heat resistance of the developed coating liquid is significantly improved in comparison with the related-art heat resistant coating liquid.

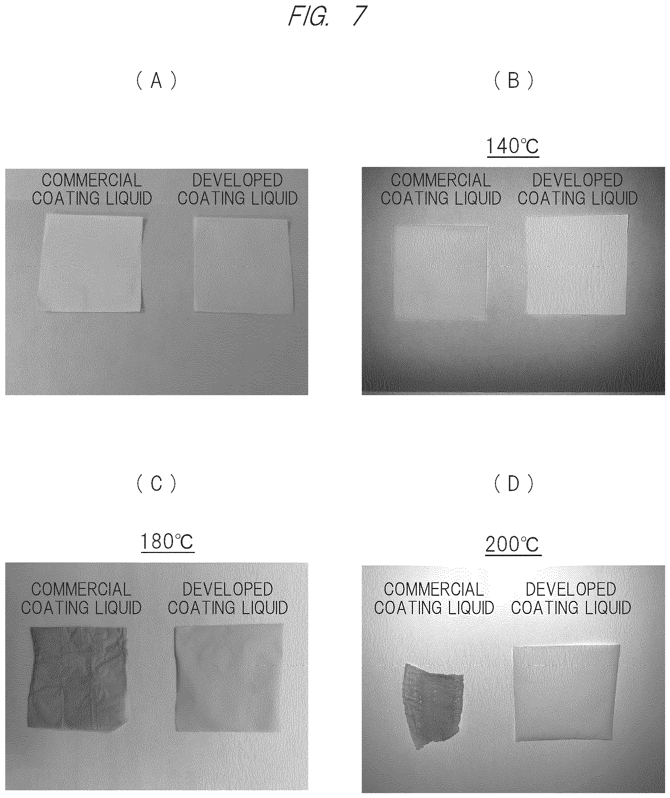

Each state of the samples processed for one hour under atmosphere of 140°C, 180°C and 200°C is shown in FIG. 7. (A) indicates an unheated state, (B) indicates the heating state at 140°C, (C) indicates the heating state at 180°C, and (D) indicates the heating state at 200°C. In the cases using the commercial coating liquid heated at 180°C and 200°C, the sample color was changed to brown, and the coating layer was cracked by the thermal shrinkage of the film. On the other hand, in the cases using the developed coating liquid, while the color change was slightly observed, the thermal shrinkage of the film and the cracking on the film surface were not observed even at any temperature.

The commercial coating liquid is aqueous dispersion solution, and therefore, is considered to have low affinity with the polyethylene that is the hydrophobic separator base substance.

On the other hand, the developed coating liquid is considered to have the improved affinity between the coating layer and the separator base substance because of the addition of the hydrophobic CeNF resulted from the SA-modifying process, and therefore, it is considerable that the heat resistance was improved.

From the above-described results, it was confirmed that the heat resistance of the separator can be significantly improved by the addition of the hydrophobic CeNF to the heat-resistant coating liquid.

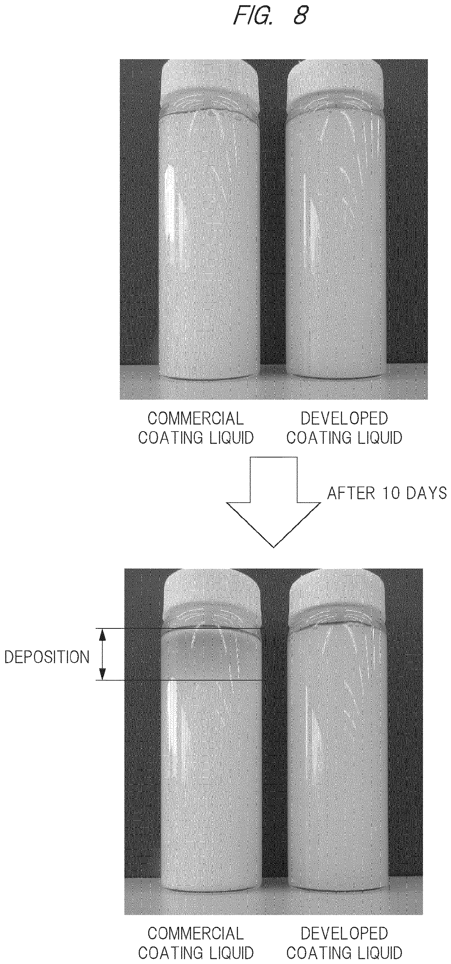

FIG. 8 is pictures each showing the states of the commercial coating liquid and the developed coating liquid. In the case of the commercial coating liquid, the deposition of the components of the coating liquid was observed after 10 days. On the other hand, in the case of the developed coating liquid, the deposition of the components was not observed.

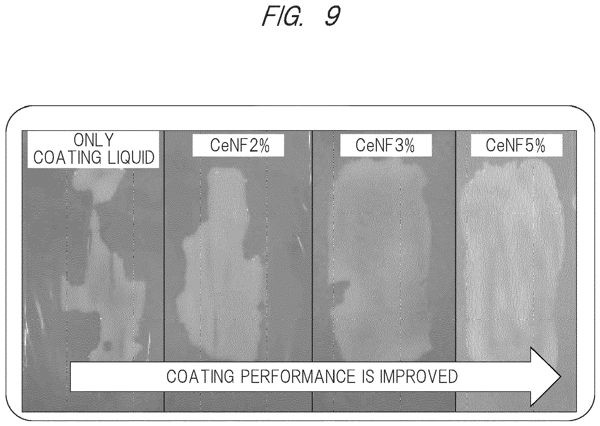

FIG. 9 is photographs each showing the wettability of the developed coating liquid on the base substance. It is found that the wettability of the developed coating liquid is improved by the addition of the hydrophobic CeNF in comparison with the coating liquid without the addition of the CeNF. As the additional amount of the hydrophobic CeNF more increases to be 2%, 3% and 5%, the wettability (coating performance) is more improved.

The Gurley number (air permeability, [sec/100 cc]) of the sample with only the base substance (the uncoated sample) is 197.5, the Gurley number (air permeability, [sec/100 cc]) of the sample coated with the coating liquid without the addition of the CeNF is 265.8, and the Gurley number (air permeability, [sec/100 cc]) of the sample coated with the coating liquid with the addition of the CeNF of 3.5% is 222.8. From these results, it is found that the Gurley number (air permeability, [sec/100 cc]) is improved by the addition of the hydrophobic CeNF.

### (Second Embodiment)

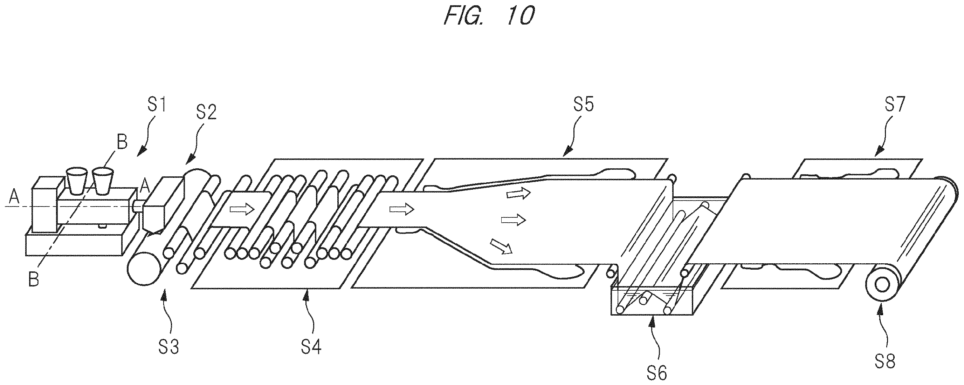

FIG. 10 is a schematic diagram showing a configuration of a manufacturing machine (system) of the present embodiment. In the present embodiment, a step of manufacturing the separator using the manufacturing machine (system) will be explained.

For example, the plasticizer (liquid paraffin) and the polyolefin (such as polyethylene) are introduced into a raw material feeding unit of the twin screw kneader/extruder (S1) of FIG. 10, and the plasticizer and the polyolefin are kneaded in a kneading unit. The kneading condition is, for example, at 80°C for 120 minutes, and the shaft rotation speed is 100 rpm.

The kneaded material (melted resin) is delivered from a discharge unit to a T-die "S2", and the melted resin is cooled in an original-fabric-form cooling machine "S3" while being extruded from a slit of the T-die S2, so that a thin-film resin compact is formed.

Then, the thin-film resin compact is drawn in the longitudinal direction by a first transverse film drawing machine (first TD machine) "S5", and is further drawn in the transverse direction by the first transverse film drawing machine (first TD machine) "S5".

Then, the drawn thin film is sunk into organic solvent (such as methylene chloride) of an extraction chamber "S6". In the drawn thin film, phase separation occurs between the polyolefin (such as polyethylene) and the plasticizer (paraffin). More specifically, the plasticizer (paraffin) is shaped into a nanometer-size island form. The nanometer-size plasticizer (paraffin) is removed (defatted) by the organic solvent (such as methylene chloride) of the extraction chamber "S6". In this manner, the porous thin film can be formed.

After that, the thin film is dried and thermally fixed while being further drawn in the transverse direction by a second transverse film drawing machine (second TD machine) "S7", so that internal stress in the film drawing is moderated. Then, by a winding machine "S8", the thin film that is delivered from the second transverse film drawing machine (second TD machine) "S7" is wound up.

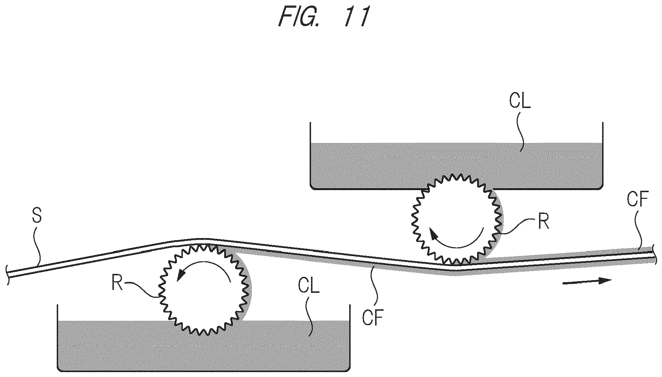

In this manner, the porous thin film (the base substance of the first embodiment) can be manufactured. In this case, a gravure coating machine (S7') shown in FIG. 11 is inserted between, for example, the second transverse film drawing machine (second TD machine) "S7" and the winding machine "S8". FIG. 11 is a cross-sectional view schematically showing a configuration of the gravure coating machine. This gravure coating machine has two gravure rolls "R". These gravure rolls R have, for example, a plurality of obliquely-shaped concaves, and the rolls are rotated while some of the concaves are arranged so as to sink in the coating liquid CL, so that the base substance S is coated with the coating liquid CL in a state in which the coating liquid is held in the obliquely-shaped concaves.

When the coating liquid CL explained in the first embodiment is used as this coating liquid CL, the coating film can be formed on the both-side surfaces of the base substance. Note that a drying machine for the coating liquid or others can be appropriately inserted if needed.

As described above, the high-performance separator can be efficiently manufactured by the usage of the machines shown in FIGs. 10 and 11.

In the foregoing, the invention made by the present inventors has been concretely described on the basis of the embodiments and working examples. However, it is needless to say that the present invention is not limited to the foregoing embodiments and working examples, and various modifications can be made within the scope of the present invention.

### [First Statement]

A method of manufacturing a battery cell includes:
(a) a step of forming a porous film as a separator; and
(b) a step of arranging the porous film between a positive electrode material and a negative electrode material, and
the step (a) includes:
(a1) a step of modifying a first filler to be hydrophobic by mixture of the first filler and an additive;
(a2) a step of forming coating liquid by mixture of the hydrophobic first filler, a second filler and solvent; and
(a3) a step of forming a coating film by application of the coating liquid onto a porous base substance.

### [Second Statement]

A battery cell includes: a positive electrode material; a negative electrode material and a separator made of a porous film formed between the positive electrode material and the negative electrode material,
the porous film includes a porous base substance and a coating film formed on a surface of the porous base substance,
the coating film includes a hydrophobic first filler and a second filler, and
thermal deformation of the porous film is equal to or lower than 5%.

### [Third Statement]

In the battery cell described in the second statement,
the first filler is a cellulose, and a hydrophilic group of the cellulose is substituted with a hydrophobic group by a reaction between the cellulose and the additive.

### [Fourth Statement]

A method of manufacturing a coating liquid includes:
(a) a step of modifying a first filler to be hydrophobic by mixture of the first filler and an additive; and
(b) a step of forming a coating liquid by mixture of the hydrophobic first filler, a second filler and solvent.

### [Fifth Statement]

In the method of manufacturing the coating liquid described in the fourth statement,
in the step (a), the first filler is a cellulose, and a hydrophilic group of the cellulose is substituted with a hydrophobic group by a reaction between the cellulose and the additive.

### [Sixth Statement]

In a porous-film coating liquid including a hydrophobic first filler, a second filler and solvent,
the first filler is a cellulose, and a hydrophilic group of the cellulose is substituted with a hydrophobic group by a reaction between the cellulose and the additive.

### [Seventh Statement]

In a filler used for a porous-film coating liquid,
in a hydrophobic cellulose,
a hydrophilic group of the cellulose is substituted with a hydrophobic group by a reaction between the cellulose and an additive.

### EXPLANATION OF REFERENCE CHARACTERS

- 1: positive electrode material
- 3: negative electrode material
- 5: porous film (separator)
- 6: can
- CF: coating film
- CL: coating liquid
- R: gravure roll
- S: base substance
- S1: twin-screw kneader/extruder
- S2: T-die
- S3: original-fabric-form cooling machine (CAST machine)
- S4: longitudinal film drawing machine (MD machine)
- S5: first transverse film drawing machine (first TD machine)
- S6: extraction chamber
- S7: second transverse film drawing machine (second TD machine)
- S7': gravure coating machine
- S8: winding machine

## Claims

1. A method of manufacturing a porous film comprising the steps of:
(a) modifying a first filler to be hydrophobic by mixture of the first filler and an additive;
(b) forming a coating liquid by mixture of the hydrophobic first filler, a second filler and solvent; and
(c) forming a coating film by application of the coating liquid onto a surface of a porous base substance.

2. The method of manufacturing the porous film according to claim 1,
wherein, in the step (a), the first filler is a cellulose, and a hydrophilic group of the cellulose is substituted with a hydrophobic group by a reaction between the cellulose and the additive.

3. The method of manufacturing the porous film according to claim 2,
wherein, in the step (a), the additive that is unreacted is extracted and removed by organic solvent.

4. The method of manufacturing the porous film according to claim 2,
wherein the reaction between the cellulose and the additive is an esterification reaction.

5. The method of manufacturing the porous film according to claim 4,
wherein the esterification reaction between the cellulose and the additive is a reaction for substituting a hydroxyl group (-OH) of the cellulose with a group having a "-O-CO-" moiety.

6. The method of manufacturing the porous film according to claim 5,
wherein the additive is a carboxylic compound.

7. The method of manufacturing the porous film according to claim 2,
wherein an amount of the cellulose in the coating liquid is equal to or higher than 0.01 wt% and equal to or lower than 40 wt% of the second filler.

8. The method of manufacturing the porous film according to claim 2,
wherein a powder shape of the cellulose has a length that is equal to or longer than 3 nm and equal to or shorter than 10 µm, and has an aspect ratio (length/diameter) that is equal to or larger than 0.01 and equal to or smaller than 10000.

9. The method of manufacturing the porous film according to claim 2,
Wherein, in the step (a), a surfactant is further added.

10. The method of manufacturing the porous film according to claim 2,
wherein the second filler includes a material selected from nano silica, carbon nanotube, talc, alumina and glass fiber.

11. A porous film comprising a porous base substance and a coating film formed on a surface of the porous base substance,
wherein the coating film includes a hydrophobic first filler and a second filler, and
thermal deformation of the porous film is equal to or lower than 5%.

12. The porous film according to claim 11,
the first filler is a cellulose, and a hydrophilic group of the cellulose is substituted with a hydrophobic group by a reaction between the cellulose and the additive.

13. The porous film according to claim 12,
wherein the reaction between the cellulose and the additive is an esterification reaction.

14. The porous film according to claim 13,
wherein the esterification reaction between the cellulose and the additive is a reaction for substituting a hydroxyl group (-OH) of the cellulose with a group having a "-O-CO-" moiety.

15. The porous film according to claim 14,
wherein the additive is a carboxylic compound.

16. The porous film according to claim 12,
wherein a powder shape of the cellulose has a length that is equal to or longer than 3 nm and equal to or shorter than 10 µm, and has an aspect ratio (length/diameter) that is equal to or larger than 0.01 and equal to or smaller than 10000.

17. The porous film according to claim 11,
wherein the coating film further includes a surfactant.

18. The porous film according to claim 11,
wherein the second filler includes a material selected from nano silica, carbon nanotube, talc, alumina and glass fiber.
